# EUROPEAN PATENT APPLICATION

(11) **EP 4 622 084 A1**
(43) Date of publication of application: **24.09.2025**
(21) Application number: 24164329.5
(22) Date of filing: 19.03.2024
(51) Int. Cl.: H02M 3/335, H02M 1/32

(54) **MODULAR DC-DC CONVERTER DEVICE, OPERATION METHOD AND ELECTROLYSIS PLANT**

(71) Applicant: Siemens Energy Global GmbH & Co. KG, 81739 München (DE)
(72) Inventor: Langenberg, Nils, 90461 Nürnberg (DE); Craciun, Bogdan, 91052 Erlangen (DE); Bendig, Marvin, 90513 Zirndorf (DE)

(57) **Abstract**

A modular DC-DC converter device 100, comprises an input interface 102a, 102b, an output interface 104a, 104b, a plurality of N submodules 108, 110, 112, 114, 116, 118 of DC-DC converters connected in ISOP-configuration, each submodule 108, 110, 112, 114, 116, 118 capable of providing an essentially identical amount of submodule DC power, and a device controller unit 120 configured to individually enable and disable provision of submodule DC power of the submodules 108, 110, 112, 114, 116, 118, wherein the DC-DC converter device 100 is configured to supply a DC load 122 connected to the output interface 104a, 104b and requiring an operational DC power of up to (N-1) times the submodule DC power with the required operational DC power while provision of submodule DC power of at least one of the submodules 108, 110, 112, 114, 116, 118 is disabled by the device controller unit 120.

## Description

The present disclosure in general relates to the operation of modular galvanically isolated or non-isolated DC-DC converter devices, such as converter devices for connecting high-power consumers requiring direct current (DC) to a DC network. More particularly, the present disclosure relates to a modular DC-DC converter device, an electrolysis plant, and a method for operating a modular DC-DC converter device. Furthermore, the present disclosure relates to a computer program product and a computer readable storage medium.

The required current form for the operation of electrolysis plants, i.e., hydrogen production plants using electrolysis, i.e., a process of using electricity to split water into hydrogen and oxygen, is direct current (DC). For the production of green hydrogen, electrical energy is provided from renewable energy sources, such as wind turbines (or wind farms containing several wind turbines) or photovoltaic systems. However, the distribution of electrical energy from the suppliers of electrical energy to high-power consumers may require a high or medium voltage distribution network, while the high-power DC loads such as the multiple electrolysis systems of a large-scale electrolysis plant require provision of high currents at a comparably low voltage. Therefore, the DC loads are connected to the power grid via suitable power converter devices, in particular because the required DC power is often provided from islanded grids and grids fed pre-dominantly from renewable energy sources, which are often weak grids. For the supply of high-power DC loads such as large-scale electrolysis plants in weak grids, restrictions on the rectifier technology arise from the limited short-circuit ratio (SCR) of said grids. One possible mitigation for this is the application of appropriate power-electronic (PE) switches, such as insulated gate bipolar transistors (IGBTs) or integrated gate-commutated thyristors (IGCTs), which can deal with low SCRs of the connected power grid.

However, on the other hand, particularly IGBTs can be prone to potential failures including, for example, latch-up, time dependent dielectric breakdown, bond wire cracking or bond wire lift off. These failure mechanisms are attributable to individual IGBTs and may result in the loss or disfunction of the specific device that uses said IGBT, e.g., the complete converter device or a specific submodule of a modular converter device.

It is an objective of the present invention to provide a cost-effective possibility for reliably providing DC current to a high-power DC load such as an electrolysis plant over long periods of time via a converter device having an operability that is optimized for a long lifetime without malfunction.

This objective is solved by a modular DC-DC converter device as stated in claim 1, an electrolysis plant as stated in claim 10, a method for operating a modular DC-DC converter device as stated in claim 11, a computer program product as stated in claim 15, and a computer readable storage medium as stated in claim 16. Advantageous additional embodiments of the invention are disclosed in the respective dependent claims.

According to a first aspect of the invention, a modular DC-DC converter device comprises an input interface, an output interface, a plurality of N submodules of DC-DC converters connected in ISOP (input serial, output parallel)-configuration, each submodule capable of providing an essentially identical amount of submodule DC power, and a device controller unit configured to individually enable and disable provision of submodule DC power of the submodules, wherein the DC-DC converter device is configured to supply a DC load connected to the output interface and requiring an operational DC power of up to (N-1) times the submodule DC power with the required operational DC power while provision of submodule DC power of at least one of the submodules is disabled by the device controller unit. N is an integer number greater than 1. The operational DC power may refer to a power rating of the DC load. Depending on the connected DC load, the operational DC power may, for example, be in in a kW range or in a MW range.

The input interface is for connecting the DC-DC converter to receive DC power from a DC power supply over a DC link or other DC power grid. The term "submodules of DC-DC converters" refers to DC-DC converter submodules, which themselves are complete DC-DC converters, and which are submodules of the DC-DC converter device. In other words, the modular DC-DC converter device comprises multiple submodules, i.e., multiple functional DC-DC converters interconnected for together providing the DC power required for operation of the connected DC load. Each of the submodules is capable of providing an essentially identical amount of submodule DC power, i.e., all the submodules can provide up to essentially the same, i.e., very similar, amounts of DC power, if enabled by the device controller unit.

To reach the necessary power levels for the supply of high-power DC loads, such as electrolysis systems, each comprising at least one electrolysis row, and together forming a large-scale electrolysis plant, with DC power of, e.g., more than 1 Mega-Watt (MW) or, for example more than 10 MW, the DC-DC converter device is provided as a plurality of N submodules of interconnected DC-DC converters, wherein the interconnection of the DC-DC converter submodules follows an input-serial, output-parallel (ISOP) configuration, i.e., a series connection of the submodules on the primary (input) side of the DC-DC converter device and a parallel connection on the secondary (output) side of the DC-DC converter device. With this connection, electrolysis plants, which require high load currents at comparably low voltages, can be supplied through a DC link with higher distribution voltages and thus lower primary side currents. For example, a DC-DC converter device may be designed to provide 10, 20, or 30 MW operational DC power to a connected electrolysis system with a plurality of submodules, each providing, e.g., about 1 MW (or for example up to 2.5 MW or more) of submodule DC power.

The amount of necessary DC-DC converter submodules is calculated by the overall operational power demand of the connected DC load, such as a connected electrolysis system, and the power transfer capacity of the individual DC-DC converter submodules or submodule DC power of the submodules.

For non-linear DC loads such as an electrolysis system, the required operational DC power defines an upper limit, as DC power demand may change over time. However, short time peaks of higher operational power demand may be acceptable, depending, e.g., on the parameters of the used power electronic devices.

The described DC-DC converter device is designed such that a DC load can be connected that is allowed to require an operational DC power of up to (N-1) times the submodule DC power. In other words, the DC-DC converter device comprises at least one DC-DC converter submodule more than could be required to provide the DC load with its operational DC power, and hence, at least one of the N available submodules can be disabled by the device controller unit during normal operation. This N-1 design enhances the reliability of the overall modular DC-DC converter device, since a redundant DC-DC converter submodule is included in the DC-DC converter device to ensure full-load operation, i.e., operation at 100%, even if one DC-DC converter submodule fails. In that case, the device controller unit can disable the failing DC converter submodule, e.g., until it has been replaced or repaired. This significantly increases the availability of a DC load such as an electrolysis system or the whole electrolysis plant and thus significantly decreases opportunity costs. For an electrolysis plant, this significantly impacts the costs for operational expenditures of the plant, since a production of hydrogen will not be interrupted by a single-failure. The design exhibits at least the described advantages with one or more than one redundant submodule. Therefore, in an example embodiment, exactly one redundant DC-DC converter submodule is provided, thereby saving costs for additional submodules.

In an embodiment of the DC-DC converter device, the submodules each comprise one or more bypass switches controlled by the device controller unit. The device controller unit activates and deactivates the bypass switches to enable and disable the corresponding complete submodule. Other possibilities for enabling and disabling provision of submodule DC power could, for example, include changing control signals of rectifiers of the DC-DC-converter submodule. However, enabling and disabling the complete submodule instead of inhibiting power flow within the DC-DC converter submodule avoids or reduces unnecessary power losses in the submodule.

In a preferred embodiment of the DC-DC converter device, the device controller unit is configured to change on a regular basis which at least one of the submodules has its provision of submodule DC power disabled. In other words, the device controller unit does not disable one or more selected submodules once and keeps the remaining submodules constantly enabled, but changes on a regular basis which of the submodules are enabled to provide the required DC power. For example, changes on a regular basis may comprise a rotation scheme wherein each of the submodules is subsequently disabled for a certain period of time before it is enabled again and another one of the submodules is disabled instead. This distributes the overall wear between the semiconductor parts of the high-power DC-DC converter device, stress on individual components can be reduced and the lifetime of the individual semiconductor components can be significantly extended.

In a preferred example embodiment, the device controller unit is configured to distribute activation time equally among all submodules of the plurality of submodules. In other words, each of the submodules is deactivated and activated following a rotation scheme of even time intervals which harmonizes the overall wear on the semiconductor parts of the DC-DC converter device by equalizing the switched-on times of the individual DC-DC converter submodules. In an embodiment, the rate of rotation is tuned to the specific DC-DC converter device, wherein a duration of activation or switch-on time intervals can be in the range of a few milliseconds to several days.

With the operation strategy of rotating the active DC-DC converter submodules, the overall wear of the DC-DC converter device comprising N DC-DC converter submodules in ISOP configuration can be reduced and the lifetime of the individual semiconductors can be significantly extended, since with this strategy the stress on the individual components can be reduced, e.g., by a factor of 1/N for even time intervals, and can be evenly distributed among the N submodules. Further, overall efficiency is increased due to submodule operation at lower temperatures.

In another embodiment, the device controller unit is configured to distribute activation time among all submodules of the plurality of submodules depending on an ageing condition of each individual submodule. With this rotation scheme based on the actual ageing conditions of the DC-DC converter submodules, a less-aged module is operated for longer periods of time than a more-aged module.

In an embodiment, the DC-DC converter device is configured to provide the operational DC power required by the DC load with a maximum of submodules providing their maximum submodule DC power and, if required, one submodule providing less than its maximum submodule DC power. The goal of this operation scheme is to have as many DC-DC converter submodules operating in their maximum operation point as possible. Therefore, for the operation at full load (DC load requires 100% of operational DC power, e.g., connected electrolysis system operates at 100% load), N-1 modules are operated at maximum operation point (100% submodule operation point), while an Nth submodule is switched off.

For the operation at an operation point between no-load and close to full load, a required first amount of DC-DC converter submodules except a remaining second amount of (at least two) DC-DC converter submodules are operated at maximum operating point (100 % submodule operation point) and one of the remaining second amount of DC-DC converter submodules is operated at a probably changing operating point below its maximum operating point and is used to balance out transient load fluctuations to the full range of the contribution capabilities of said one submodule, i.e., its maximum submodule DC power. If, for example, the DC-DC converter submodule consists of N = 6 submodules (5 submodules plus 1 redundant submodule), each submodule accounts for 20% of the operational DC power demand by the connected DC load. For an operation point between 80% and 100% load, 4 submodules are to be operated at 100% operation point and the 5th (N-1) submodule is used for balancing out load fluctuations between 80% and 100%. For an operation point between 60% and 80%, the 4th (N-2) submodule is responsible for balancing out load fluctuations and the submodules N-3 to N-5 are to be operated at 100% operation point.

Even in this partial load operation, it is preferred that the device controller unit is configured to distribute activation time equally among all submodules of the plurality of submodules and the deactivation assignments (as N and N-1, N-2, ... submodules) are rotated across the entire plurality of DC-DC converter submodules in ISOP configuration. This is advantageous since unnecessary cycling of and thus stress on the used semiconductors, such as IGBTs, can be avoided and the lifetime of the individual semiconductors can be extended and the rotation of the deactivation assignment as N, N-1, N-2,... submodules enables an even aging of the DC-DC converter submodules and, thus, an extension the operation lifetime of the entire DC-DC converter device in ISOP configuration.

A DC load like an electrolysis system will not be just switched on to start operation at its operation point but will in a preferred embodiment be enabled by using a ramp-up sequence. However, even during ramp-up (and ramp-down) phases, a preferred operation scheme includes having as many DC-DC converter submodules operating in their maximum operation point as possible. For ramp-up of an electrolysis system (0% to set load point, i.e., operation point, of the electrolysis system), the ramp-up sequence starts with one submodule to be ramped-up from 0% to 100% operation point. Once maximum operation point of the first module has been reached, the second submodule is to be ramped up from 0% to 100% operation point. This sequence is to be repeated with the next submodules until the set load point of the electrolysis plant is reached. For ramp-down of the electrolysis plant, the same approach is taken in reverse, where all submodules except one are kept in maximum operation point and the one submodule is ramped down to 0% before the ramp-down of the next submodule starts. In an embodiment, the operation strategies are controlled by the device controller unit, while the operating points of the submodules can be controlled either by the device controller unit or dedicated individual submodule controller units, whereas the operation point of the DC load may be provided to the device controller unit by a controller unit of the electrolysis system or other connected DC load.

In an embodiment, the DC-DC converter device is configured to supply a DC load connected to the output interface and requiring a short-time power boost beyond the operational DC power of up to (N-1) times the submodule DC power with the required power boost by enabling provision of submodule DC power of the at least one of the submodules currently disabled by the device controller unit. In this power boost mode, power and load fluctuations within the nominal operation limits of the connected DC load, e.g., the electrolysis system, are balanced out by the assigned individual DC-DC converter submodule. In this power boost mode, the nominal power, i.e., the operational DC power of the connected DC load, is equal to the power rating of the combined N-1 modules, i.e., (N-1) times the submodule DC power, but the additional power boost can be delivered by the Nth submodule. This submodule can draw additional power within the (short-time) limits of the connected DC load and can supply ancillary grid services, such as frequency stabilization.

In an embodiment of the DC-DC converter device, the submodules are galvanically isolated DC-DC converter submodules, preferably bidirectional galvanically isolated DC-DC converter submodules, i.e., the galvanic isolation works in both directions. Galvanic isolation prevents DC and unwanted AC currents between two sections of an electrical system while still allowing power transfer between the sections, e.g., by capacitive or inductive means, but without an electrically conductive path. Typical variants of such galvanically isolated DC-DC converters are, for example, Single-Active Bridges or Dual-Active Bridges. The galvanically isolated DC-DC converters effectively decouple DC-based network units such as DC loads, e.g., electrolysis systems, and DC power supplies from each other and from any overlying point of common coupling to an AC power grid. A DC-based network unit is thereby protected against adverse influences received over the DC link and at the same time will not impose detrimental effects on the DC link and connected units. The galvanically isolated DC-DC converter devices enable, for example, the decoupling of non-linear DC loads such as electrolysis systems from an overlying AC power grid and from the DC link that connects the input interfaces of the DC-DC converter devices which connect the DC-based network units. This significantly enhances the power quality at a point of common coupling to an AC power grid, because, e.g., harmonics generated by switches of power converters used by the electrolysis systems are not distributed back into the DC link and the point of coupling to an AC power grid. The galvanic isolation also prevents circular currents between parallel electrolysis systems, which could otherwise cause additional losses and increase corrosion and ageing of the process side, i.e., the rows of electrolysis cells of the electrolysis systems, and significantly increases the safety of an electrolysis plant in case of a fault.

In an embodiment, the galvanically isolated DC-DC converter submodules comprise a DC to AC conversion module connected to a transformer module connected to an AC to DC conversion module. By means of this modular design, operation voltages as well as currents can be individually tuned to the specifications of the connected DC load and the DC link connected to the input interface of the DC-DC converter device independently from each other.

According to a second aspect of the invention, an electrolysis plant comprises one or more electrolysis systems, each comprising at least one electrolyser row, wherein the electrolysis plant comprises one or more DC-DC converter devices according to the first aspect of the invention, configured to connect the one or more electrolysis systems to receive electrical power from a direct current link. In this way, the advantages and special features of the modular DC-DC converter device with a plurality of DC-DC converter submodules in (N-1) ISOP configuration according to the invention are also implemented within the framework of an electrolysis plant with multiple electrolysis systems connected to a DC link via such modular DC-DC converter devices.

The DC link may, for example, be a medium voltage direct current (MVDC) link. Medium voltage (MV) is the DC voltage range between 1.5 kV and 45 kV. A high-power MVDC link is operated, for example, at or above a voltage of 1.5 kV. Through the operation at higher voltage levels instead of using a low voltage DC link, the operating current and thus the distribution losses can be reduced. Accordingly, any necessary cooling can be reduced and the overall efficiency is increased. An MVDC link enables cost-optimized high-power distribution of DC current and is, therefore, e.g., particularly suitable to supply multi-Megawatt electrolysis plants with direct current provided by DC power supplies, for example renewable energy source systems such as wind farms or photovoltaic systems, or provided by an AC-DC converter receiving AC power via an intermediate transformer from an AC power grid.

The usage of bidirectional galvanically isolated DC-DC converter devices for connection to the MVDC link ensures that the MVDC link voltage cannot occur in the connected electrolysis systems due to a fault. It is, therefore, for example, not necessary in a connected electrolysis system to apply a sufficiently rated MVDC circuit breaker. Furthermore, this approach allows the operation voltage of the MVDC link to be in a cost optimized range, independent of the operation voltages of the connected electrolysis systems.

According to a third aspect of the invention, a method for operating a modular DC-DC converter device is provided, wherein the DC-DC converter device comprises an input interface, an output interface, a plurality of N submodules of DC-DC converters connected in ISOP-configuration, each submodule capable of providing an essentially identical amount of submodule DC power, and a device controller unit. The provided method comprises at least the steps of individually enabling and disabling, by the device controller unit, provision of submodule DC power of the submodules, and supplying, by the DC-DC converter device, a DC load connected to the output interface and requiring an operational DC power of up to (N-1) times the submodule DC power with the required operational DC power while provision of submodule DC power of at least one of the submodules is disabled by the device controller unit.

In a preferred embodiment of the method, the step of individually enabling and disabling provision of submodule DC power of the submodules comprises changing on a regular basis which at least one of the submodules has its provision of submodule DC power disabled. For example, changes on a regular basis may comprise a rotation scheme wherein each of the submodules is subsequently disabled for a certain period of time before it is enabled again and another one of the submodules is disabled instead. This distributes the overall wear between the semiconductor parts of the high-power DC-DC converter device, stress on individual components can be reduced, and the lifetime of the individual semiconductor components can be significantly extended.

And in an example embodiment, the step of changing on a regular basis which at least one of the submodules has its provision of submodule DC power disabled comprises distributing activation time equally among all submodules of the plurality of submodules. In other words, each of the submodules is deactivated and activated following a rotation scheme of even time intervals which harmonizes the overall wear on the semiconductor parts of the DC-DC converter device by equalizing the switched-on times of the individual DC-DC converter submodules.

In another example embodiment, the step of changing on a regular basis which at least one of the submodules has its provision of submodule DC power disabled comprises distributing activation time depending on an ageing condition of each individual submodule. With this rotation scheme based on the actual ageing conditions of the DC-DC converter submodules, a less-aged module is operated for longer periods of time than a more-aged module.

In a further embodiment of the method, the step of individually enabling and disabling provision of submodule DC power of the submodules comprises receiving an operational DC power value of the connected DC load, determining a maximum number of submodules for providing their maximum submodule DC power, wherein a sum of the maximum submodule DC power is below or equal to the operational DC power value of the connected DC load, and if the sum is equal to the operational DC power value, enabling submodules for provision of submodule DC power of said maximum number of submodules, or if the maximum number is less than N-1 and the sum is below the operational DC power value, enabling submodules for provision of submodule DC power of said maximum number of submodules and enabling one additional submodule for provision of less than its maximum submodule DC power, or if the maximum number is equal to N-1 and the sum is below the operational DC power value, enabling submodules for provision of submodule DC power of said maximum number of submodules and enabling one additional submodule for a short-time power boost.

In this embodiment, the operational DC power required by the DC load is provided with a maximum of submodules providing their maximum submodule DC power and, if required, one submodule providing less than its maximum submodule DC power. Either in a first mode the maximum submodule DC power of N-1 submodules corresponds to the required operational DC power of the connected DC load, then said N-1 submodules are enabled to provide their maximum submodule DC power. Or in a second mode the maximum submodule DC power of N-1 submodules is more than the required operational DC power of the connected DC load, then at most N-2 submodules are enabled to provide their maximum submodule DC power and one more that provides less than its maximum submodule DC power. Or in a third mode the maximum submodule DC power of N-1 submodules corresponds to less than the currently required operational DC power of the connected DC load (which corresponds to a short term exception, since otherwise the DC-DC converter device is supposed to be able to provide the power consumption of the DC load by N-1 submodules), then said N-1 submodules are enabled to provide their maximum submodule DC power and further the Nth submodule is not disabled but used to provide the required short term power boost.

These modes of operation not only apply during normal operation phases of the DC load, which may, for example, be an electrolysis system or other nonlinear DC load, but also during ramp-up and ramp down-down phases, i.e., even during ramp-up and ramp-down phases, the operation scheme includes having as many DC-DC converter submodules operating in their maximum operation point as possible. For ramp-up of an electrolysis system, the ramp-up sequence starts with one submodule to be ramped-up from 0% to 100% operation point. Once maximum operating point of the first module has been reached, the second module is ramped up from 0% to 100% operation point. This sequence is repeated with the next submodules until the set load point of the DC load is reached, i.e., until the DC load receives its required operational DC power. For ramp-down of the DC load, the same approach is taken in reverse, where all modules except one are kept in maximum operation point and the one submodule is ramped down to 0% before the ramp-down of the next submodule starts.

According to a fourth aspect of the invention, a computer program product comprises code portions that, when executed on a device controller unit of a DC-DC converter device according to the first aspect of the invention, enable the DC-DC converter device to execute steps of a method according to the third aspect of the invention. For this, in an embodiment of the DC-DC converter device, the device controller unit comprises a programmable device and a memory. The programmable device refers to any data processing unit such as a central processing unit (CPU), microprocessor, microcontroller or any other processor. The memory can comprise the computer program product corresponding to a computer program adapted to configure the programmable device of the device controller unit to carry out steps of the method according to the third aspect of the invention.

Further, according to a fifth aspect of the invention, a computer readable storage medium is provided, having stored therein a computer program product according to the fourth aspect of the invention. And according to a sixth aspect of the invention, a data carrier signal is provided that carries a computer program product according to the fourth aspect of the invention. The computer program product may be provided on a computer readable storage medium, i.e., a data carrier, such as a CD, DVD, memory card or other storage medium, in particular a non-volatile storage medium, stored with data that is loadable in a memory of the device controller unit, wherein the data represents the computer program. As another example, the data carrier may further be a data connection, such as a telephone cable or data cable or a wireless connection, and the computer program product may be represented as data carrier signal transmitted via the data carrier.

While not explicitly described, the presented embodiments may be employed in any combination or sub-combination.

The properties, features and advantages of the invention described above, and the manner in which they are achieved, will become clearer and more clearly understood in connection with the following description of the exemplary embodiments, which are explained in more detail in connection with the drawings, wherein
- Fig. 1: schematically illustrates a first example of modular DC-DC converter device according to an embodiment of the invention;
- Fig. 2: schematically illustrates a second example of a modular DC-DC converter device according to another embodiment of the invention;
- Fig. 3: schematically illustrates an example of an electrolysis plant according to another embodiment of the invention, connected to an MVDC link; and
- Fig. 4: schematically illustrates an example of a method for operating a modular DC-DC converter device according to another embodiment of the invention.

It is to be understood that other embodiments may be used and structural or logical changes may be made without departing from the scope of the present invention. It is to be understood that the features of the various exemplary embodiments described above and below may be combined with each other unless specifically stated otherwise. The description is therefore not to be taken in a limiting sense, and the scope of the present invention is defined by the appended claims.

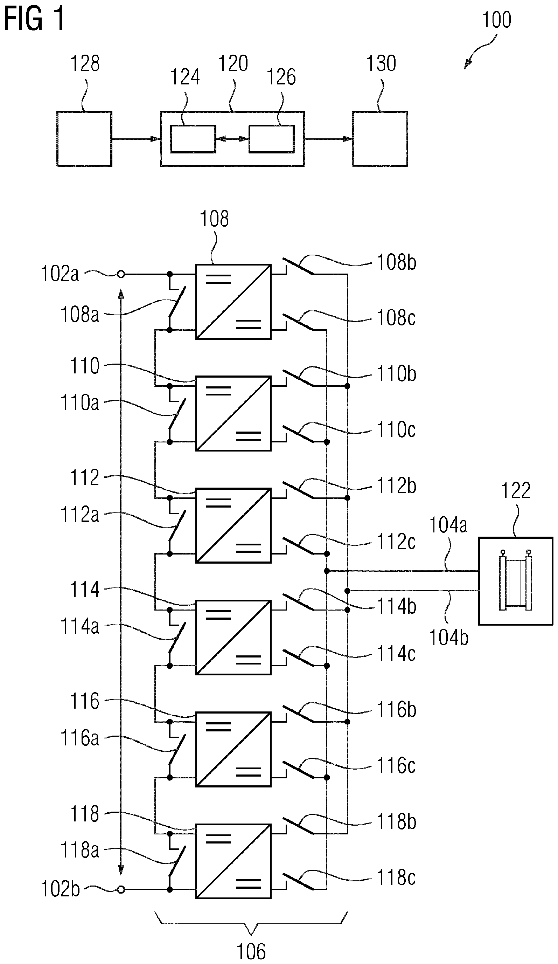

In Fig. 1, a first example of modular DC-DC converter device according to an embodiment of the invention is schematically shown. The shown modular DC-DC converter device 100 comprises an input interface 102a, 102b, an output interface 104a, 104b and a plurality 106 of N submodules 108, 110, 112, 114, 116, 118 of DC-DC converters connected in input serial-, output parallel- (ISOP) configuration. N is a positive integer number. In Fig.1, N equals 6. Each of the N=6 submodules 108, 110, 112, 114, 116, 118 is capable of providing an essentially identical amount of submodule DC power. The DC-DC converter device 100 further comprises a device controller unit 120 that is configured, e.g., programmed, to individually enable and disable provision of submodule DC power of the submodules 108, 110, 112, 114, 116, 118 so that the DC-DC converter device 100 can supply a DC load 122, which in Fig. 1 is an electrolysis system connected to the output interface 104a, 104b with the operational DC power required by the DC load 122 while provision of submodule DC power of at least one of the submodules 108, 110, 112, 114, 116, 118 is disabled by the device controller unit 120.

The DC-DC converter device 100 is configured or selected such that the overall sum of DC power that can be provided at a time by N-1 submodules 108, 110, 112, 114, 116 is suitable for the connected DC load 122, i.e., the operational DC power of the DC load usually does not exceed (N-1) times the submodule DC power.

In the embodiment shown in Fig. 1, the submodules 108, 110, 112, 114, 116, 118 each comprise bypass switches 108a, 108b, 108c; 110a, 110b, 110c; 112a, 112b, 112c; 114a, 114b, 114c; 116a, 116b, 116c; 118a, 118b, 118c and the device controller unit 120 is configured or programmed to individually enable and disable provision of submodule DC power of the submodules 108, 110, 112, 114, 116, 118 by controlling switching on and off said bypass switches, thereby enabling or disabling bypassing of the corresponding submodules in the ISOP configuration.

In the embodiment shown in Fig. 1, the device controller unit comprises at least a programmable device 124 and a memory 126. The programmable device 124 refers to any data processing unit such as a central processing unit (CPU), microprocessor, microcontroller or any other processor. The memory 124 can comprise a computer program product corresponding to a computer program adapted to configure the programmable device 124 of the device controller unit 120 to carry out steps of a method for operating the modular DC-DC converter device 100, which includes to change on a regular basis which of the submodules 108, 110, 112, 114, 116, 118 has its provision of submodule DC power disabled, in other words which of the N submodules is bypassed by setting the corresponding bypass switches. Furthermore, the device controller unit 120 is configured to execute a rotation scheme, i.e., to sequentially bypass (at least) one of the submodules, each one at a different time, while the remaining submodules provide their submodule DC power to the DC load 122 connected to the output interface 104a, 104b. That is, the device controller unit 120 is configured to distribute activation time among all submodules 108, 110, 112, 114, 116, 118 of the plurality 106 of submodules, e.g., equally or depending on an ageing condition of each individual submodule.

Due to the ISOP configuration, the DC-DC converter device 100 is suitable for providing electrolysis systems with DC current, since the ISOP configuration is particularly suitable for connecting a DC load with a high demand of DC current, for example several Kilo-Ampere (kA), e.g., 10 kA, at comparably low voltage values to a DC supply over a DC network or DC link configured to provide medium or high voltages at comparably low current values, such as a medium voltage direct current (MVDC) link. An MVDC link for example, provides DC voltages between 1 kV and 45 kV, e.g., 20 kV.

The device controller unit 120 is configured to enable as few submodules as possible for providing the required operational DC power by enabling as many submodules as possible to provide their maximum submodule DC power. This configures the DC-DC converter device 100 to provide the operational DC power required by the DC load 122 with a maximum of submodules 108, 110, 112, 114, 116 providing their maximum submodule DC power and, if required, any remaining delta is provided by one submodule 118 providing less than its maximum submodule DC power.

This even applies, at least for a short period of time, when the DC load 122 requires more than the actual maximum operational DC power, because the DC-DC converter device 100 is also configured to supply the DC load 122 connected to the output interface 104a, 104b and requiring a short-time power boost beyond the operational DC power of up to (N-1) times the submodule DC power with said required power boost by enabling provision of submodule DC power of the submodule currently disabled by the device controller unit 120. That is, the device controller unit pauses the sequentially enabling and disabling the submodules and additionally temporarily enables the currently disabled Nth submodule.

In the embodiment shown in Fig. 1, the device controller unit 120 controls submodule DC power provision based on the operational DC power value actually required by the connected DC load 122. This target value or a corresponding value of required current at the chosen setpoint (i.e., operation point) of the DC load 122 is provided by a load controller unit 128 being part of or connected to the DC load 122. The device controller unit 120 will then either directly control each submodule. Or in the shown embodiment, the device controller unit 120 is configured to decide which submodule will be activated and which one will be bypassed and then to provide target values for submodule DC power provision or corresponding voltage or current setpoint (i.e., operation point) values and submodule activation/deactivation signals to submodule controller units 130 being part of or connected to the submodules 108, 110, 112, 114, 116, 118. The submodule controller units 130 receive their individual current setpoints and activation/deactivation signals and determine their necessary switching signals and parameter values themselves.

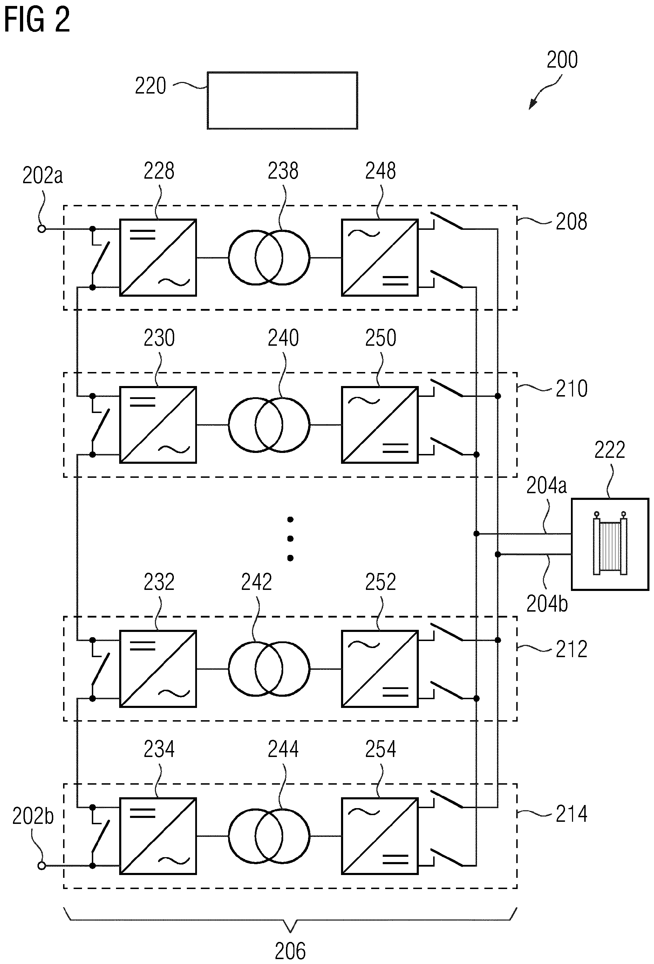

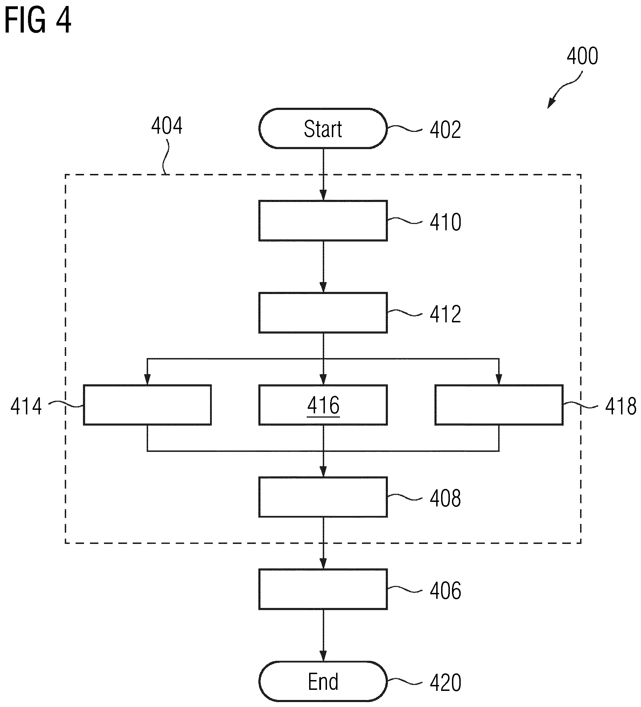

In Fig. 2, a second example of a modular DC-DC converter device according to another embodiment of the invention is schematically shown. The shown modular DC-DC converter device 200 comprises an input interface 202a, 202b, an output interface 204a, 204b and a plurality 206 of N submodules 208, 210, 212, 214 of DC-DC converters connected in ISOP-configuration. In Fig.2, 4 of the N submodules are shown. Each of the 4 shown submodules 208, 210, 212, 214 is capable of providing an essentially identical amount of submodule DC power. The DC-DC converter device 200 further comprises a device controller unit 220 that is configured, e.g., programmed, to individually enable and disable provision of submodule DC power of the submodules 208, 210, 212, 214 so that the DC-DC converter device 200 can supply a DC load 222, which in Fig. 2 is an electrolysis system connected to the output interface 204a, 204b with the operational DC power required by the DC load 222 while provision of submodule DC power of at least one of the submodules 208, 210, 212, 214 is disabled by the device controller unit 220. The functionality of the DC-DC converter device 200 shown in Fig. 2 corresponds to the functionality of the DC-DC converter device 100 shown in Fig. 1. In the embodiment shown in Fig. 2, the DC-DC converter submodules 208, 210, 212, 214 are shown as galvanically isolated DC-DC converter submodules. Each of the galvanically isolated DC-DC converter submodules 208, 210, 212, 214 comprises a DC to AC conversion module 228, 230, 232, 234 connected to a transformer module 238, 240, 242, 244 connected to an AC to DC conversion module 248, 250, 252, 254.

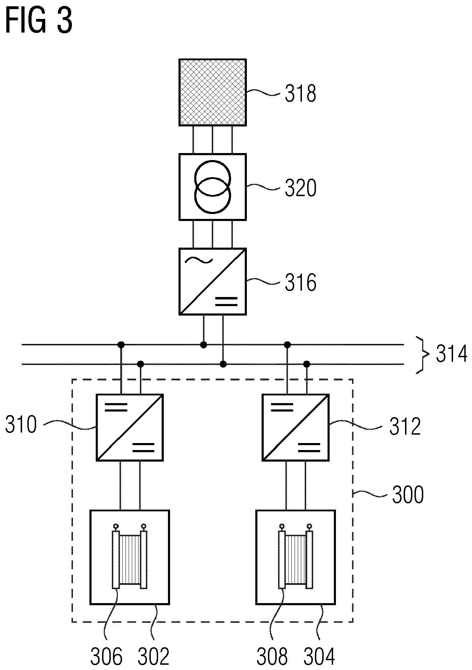

In Fig. 3, an example of an electrolysis plant according to another embodiment of the invention, connected to an MVDC link 314, is schematically illustrated. The electrolysis plant 300 comprises multiple electrolysis systems, wherein two of the electrolysis systems 302, 304 are shown in Fig.3, each comprising at least one electrolyser row 306, 308. The electrolysis plant comprises DC-DC converter devices 310, 312, which may correspond to the DC-DC converter device 100 shown in Fig. 1 or the DC-DC converter device 200 shown in Fig. 2, to connect the electrolysis systems 302, 304 to receive electrical power from a direct current link 314. In Fig. 3, the shown direct current link 314 is a medium voltage direct current (MVDC) link. The direct current link 314 may be connected to one or more DC power supplies. In the system shown in Fig. 3, the direct current link 314 is supplied with DC power provided by an AC-DC converter device 316. The input AC power is provided by a connection to a high voltage (HV) AC power grid 318 that is connected to the AC input side of the AC-DC converter device 316 by means of a transformer 320, which is provided as a high voltage to medium voltage transformer to adapt the voltage range to the voltage range of the MVDC link.

In Fig. 4, an example of a method 400 for operating a modular DC-DC converter device according to another embodiment of the invention is schematically shown, wherein the DC-DC converter device comprises an input interface, an output interface, a plurality of N submodules of DC-DC converters connected in ISOP-configuration, each submodule capable of providing an essentially identical amount of submodule DC power, and a device controller unit.

The method begins in a start state 402 during which, for example, a programmable device of the device controller unit can be initialized with a computer program product stored in a memory of the device controller unit, and a state of a connected DC load is determined.

The method 400 then continues with a step of individually enabling and disabling 404, by the device controller unit, provision of submodule DC power of the submodules, and a step of supplying 406, by the DC-DC converter device, the DC load connected to the output interface and requiring an operational DC power of up to (N-1) times the submodule DC power with the required operational DC power while provision of submodule DC power of at least one of the submodules is disabled by the device controller unit.

In the embodiment of the method 400 shown in Fig. 4, the step of individually enabling and disabling 404 provision of submodule DC power of the submodules comprises several sub-steps. In a first sub-step, an operational DC power value of the connected DC load is received 410. This value may be received from a load controller unit of the connected DC load.

In a next sub-step, a maximum number of submodules for providing their maximum submodule DC power, wherein a sum of the maximum submodule DC power is below or equal to the operational DC power value of the connected DC load, is determined 412.

Then, one out of three alternative sub-steps is carried out in order to have as many DC-DC converter submodules operating in their maximum operation point as possible at any time. The alternatives depend on a remaining delta between the submodule DC power that can be provided by submodules providing their maximum DC power and the operational DC power actually required by the DC load connected to the output interface of the DC-DC converter device: If the sum is equal to the operational DC power value, submodules for provision of submodule DC power of said maximum number of submodules are enabled 414. Or if the maximum number is less than N-1 and the sum is below the operational DC power value, submodules for provision of submodule DC power of said maximum number of submodules and one additional submodule for provision of less than its maximum submodule DC power are enabled 416. Or if the maximum number is equal to N-1 and the sum is below the operational DC power value, submodules for provision of submodule DC power of said maximum number of submodules and one additional submodule for a short-time power boost are enabled 418.

Even during ramp-up and ramp-down phases during which the operational DC power of the DC load is changed, increased from zero to a maximum operational DC power as a target operation point, or decreased from maximum to zero, respectively, it is preferred to operate the device controller unit to have as many DC-DC converter submodules operating in their maximum operation point as possible, i.e., providing their maximum submodule DC power.

The step of individually enabling and disabling 404 provision of submodule DC power of the submodules further comprises the sub-step of changing 408 on a regular basis which at least one of the submodules has its provision of submodule DC power disabled. In the shown method, this includes distributing activation time equally (or for example, depending on ageing conditions of the individual submodules) among all submodules of the plurality of submodules. This may be carried out following a rotation scheme where the N submodules are sequentially disabled, at least one at a time.

The method ends 420, for example, when the DC-DC converter device is disabled or no more DC load is connected to the output interface or no more operational DC power is required by the connected DC load, e.g., after shutdown of the DC load.

Those skilled in the art will recognize that the boundaries between blocks are merely illustrative and that alternative embodiments may merge blocks or impose an alternative composition of functionality upon various blocks. It should be noted that, depending on the embodiment, method steps, although described and illustrated according to certain sequence or order of steps, may at least partly be carried out in a different order or simultaneously. Other steps may be added and certain steps described here may be left out.

Although the invention has been illustrated and described in detail by the shown preferred embodiments, the invention is not limited by the disclosed examples and other variations can be derived therefrom by those skilled in the art without departing from the scope of the invention.

In summary, a modular DC-DC converter device 100 is provided which comprises an input interface 102a, 102b, an output interface 104a, 104b, a plurality of N submodules 108, 110, 112, 114, 116, 118 of DC-DC converters connected in ISOP-configuration, each submodule 108, 110, 112, 114, 116, 118 capable of providing an essentially identical amount of submodule DC power, and a device controller unit 120 configured to individually enable and disable provision of submodule DC power of the submodules 108, 110, 112, 114, 116, 118, wherein the DC-DC converter device 100 is configured to supply a DC load 122 connected to the output interface 104a, 104b and requiring an operational DC power of up to (N-1) times the submodule DC power with the required operational DC power while provision of submodule DC power of at least one of the submodules 108, 110, 112, 114, 116, 118 is disabled by the device controller unit 120.

Further, an electrolysis plant, a method for operating a modular DC-DC converter device, a computer program product and a computer readable storage medium are provided.

## Claims

1. Modular DC-DC converter device (100), comprising
an input interface (102a, 102b); an output interface (104a, 104b);
a plurality of N submodules (108, 110, 112, 114, 116, 118) of DC-DC converters connected in ISOP-configuration, each submodule (108, 110, 112, 114, 116, 118) capable of providing an essentially identical amount of submodule DC power; and
a device controller unit (120) configured to individually enable and disable provision of submodule DC power of the submodules (108, 110, 112, 114, 116, 118), wherein
the DC-DC converter device (100) is configured to supply a DC load (122) connected to the output interface (104a, 104b) and requiring an operational DC power of up to (N-1) times the submodule DC power with the required operational DC power while provision of submodule DC power of at least one of the submodules (108, 110, 112, 114, 116, 118) is disabled by the device controller unit (120).

2. The DC-DC converter device as claimed in claim 1, wherein the submodules (108, 110, 112, 114, 116, 118) each comprise one or more bypass switches (108a, 108b, 108c) controlled by the device controller unit (120).

3. The DC-DC converter device as claimed in claim 1 or claim 2, wherein the device controller unit (120) is configured to change on a regular basis which at least one of the submodules (108, 110, 112, 114, 116, 118) has its provision of submodule DC power disabled.

4. The DC-DC converter device as claimed in claim 3, wherein the device controller unit (120) is configured to distribute activation time equally among all submodules (108, 110, 112, 114, 116, 118) of the plurality of submodules.

5. The DC-DC converter device as claimed in claim 3, wherein the device controller unit (120) is configured to distribute activation time among all submodules of the plurality of submodules depending on an ageing condition of each individual submodule.

6. The DC-DC converter device as claimed in any of the preceding claims, wherein the DC-DC converter device (100) is configured to provide the operational DC power required by the DC load (122) with a maximum of submodules (108, 110, 112, 114, 116) providing their maximum submodule DC power and, if required, one submodule (118) providing less than its maximum submodule DC power.

7. The DC-DC converter device as claimed in any of the preceding claims, wherein the DC-DC converter device (100) is configured to supply a DC load (122) connected to the output interface (104a, 104b) and requiring a short-time power boost beyond the operational DC power of up to (N-1) times the submodule DC power with the required power boost by enabling provision of submodule DC power of the at least one of the submodules currently disabled by the device controller unit (120) .

8. The DC-DC converter device as claimed in any of the preceding claims, wherein the submodules are galvanically isolated DC-DC converter submodules (208, 210, 212, 214).

9. The DC-DC converter device as claimed in claim 8, wherein the galvanically isolated DC-DC converter submodules (208, 210, 212, 214) comprise a DC to AC conversion module (228, 230, 232, 234) connected to a transformer module (238, 240, 242, 244) connected to an AC to DC conversion module (248, 250, 252, 254).

10. Electrolysis plant (300), comprising
one or more electrolysis systems (302, 304), each comprising at least one electrolyser row (306, 308), wherein the electrolysis plant (300) further comprises
one or more DC-DC converter devices (310, 312) as claimed in any of the claims 1 to 9 configured to connect the one or more electrolysis systems (302, 304) to receive electrical power from a direct current link (314).

11. Method (400) for operating a modular DC-DC converter device, wherein the DC-DC converter device comprises an input interface, an output interface, a plurality of N submodules of DC-DC converters connected in ISOP-configuration, each submodule capable of providing an essentially identical amount of submodule DC power, and a device controller unit; the method comprising
individually enabling and disabling (404), by the device controller unit, provision of submodule DC power of the submodules; and
supplying (406), by the DC-DC converter device, a DC load connected to the output interface and requiring an operational DC power of up to (N-1) times the submodule DC power with the required operational DC power while provision of submodule DC power of at least one of the submodules is disabled by the device controller unit.

12. The method as claimed in claim 11, wherein the step of individually enabling and disabling (404) provision of submodule DC power of the submodules comprises changing (408) on a regular basis which at least one of the submodules has its provision of submodule DC power disabled.

13. The method as claimed in claim 12, wherein the step of changing (408) on a regular basis which at least one of the submodules has its provision of submodule DC power disabled comprises distributing activation time equally or depending on an ageing condition of each individual submodule among all submodules of the plurality of submodules.

14. The method as claimed in any of claims 11 to 13, wherein the step of individually enabling and disabling (404) provision of submodule DC power of the submodules comprises
receiving (410) an operational DC power value of the connected DC load;
determining (412) a maximum number of submodules for providing their maximum submodule DC power, wherein a sum of the maximum submodule DC power is below or equal to the operational DC power value of the connected DC load; and
if the sum is equal to the operational DC power value, enabling submodules for provision of submodule DC power of said maximum number of submodules (414), or
if the maximum number is less than N-1 and the sum is below the operational DC power value, enabling submodules for provision of submodule DC power of said maximum number of submodules and enabling one additional submodule for provision of less than its maximum submodule DC power (416), or
if the maximum number is equal to N-1 and the sum is below the operational DC power value, enabling submodules for provision of submodule DC power of said maximum number of submodules and enabling one additional submodule for a short-time power boost (418).

15. Computer program product, comprising code portions that, when executed on a device controller unit (120) of a DC-DC converter device (100) according to any of the claims 1 to 9, enable the DC-DC converter device (100) to execute steps of a method (400) as claimed in any of the claims 11 to 14.

16. Computer readable storage medium, comprising a computer program product as claimed in claim 15.
